# EUROPÄISCHE PATENTSCHRIFT

(11) **EP 3 802 201 B1**
(45) Veröffentlichungstag und Bekanntmachung des Hinweises auf die Patenterteilung: **15.07.2026**
(21) Anmeldenummer: 19719813.8
(22) Anmeldetag: 23.04.2019
(51) Int. Cl.: B60L 53/31, H02J 7/00, B60L 53/16

(54) **LADEVORRICHTUNG UND GEHÄUSE EINER LADEVORRICHTUNG**
CHARGING DEVICE AND HOUSING OF A CHARGING DEVICE
DISPOSITIF DE CHARGE ET BOÎTIER D'UN DISPOSITIF DE CHARGE

(30) Priorität: 30.05.2018 DE 102018112974
(43) Veröffentlichungstag der Anmeldung: 14.04.2021
(73) Patentinhaber: Compleo Charging Solutions GmbH & Co. KG, 58513 Lüdenscheid (DE)
(72) Erfinder: MÜLLER-WINTERBERG, Christian, 46282 Dorsten (DE); HELNERUS, Stefan, 59821 Anrsberg (DE)
(74) Vertreter: Gottschald Patentanwälte Partnerschaft mbB
(86) Internationale Anmeldenummer: PCT/EP2019/060269
(87) Internationale Veröffentlichungsnummer: WO 2019/228711

(56) Entgegenhaltungen:
- EP-A1- 0 619 628
- EP-A1- 0 619 628
- EP-A1- 2 523 300
- EP-A1- 2 523 300
- EP-A1- 2 672 605
- EP-A1- 2 672 605
- EP-A2- 2 032 384
- EP-A2- 2 032 384
- EP-A2- 2 882 607
- WO-A2-2011/147994
- WO-A2-2011/147994
- US-A1- 2010 013 433
- US-A1- 2010 013 433
- SCHNEIDER ELECTRIC: "EVlink City™ Bornes de Recharge de Voirie Guide de Maintenance", 13 January 2015 (2015-01-13), http://www.schneider-electric.com/fr/FR/download/document/EVCITY003FR?_downloadcenter_WAR_downloadcenterRFportlet_documentId=682527013&_downloadcenter_WAR_downloadcenterRFportlet_documentDetailsBackUR, XP055247212, Retrieved from the Internet <URL:http://download.schneider-electric.com/files?p_Reference=EVCITY003FR&p_EnDocType=Technical leaflet&p_File_Id=682527020&p_File_Name=EVCITY003FR_Manuel_Maintenancel-V3.pdf> [retrieved on 20160203]
- SCHNEIDER ELECTRIC: "EVlink City(TM) Bornes de Recharge de Voirie Guide de Maintenance", 13 January 2015 (2015-01-13), XP055247212, Retrieved from the Internet <URL:http://download.schneider-electric.com/files?p_Reference=EVCITY003FR&p_EnDocType=Technical leaflet&p_File_Id=682527020&p_File_Name=EVCITY003FR_Manuel_Maintenancel-V3.pdf> [retrieved on 20160203]

## Beschreibung

Die Anmeldung betrifft eine Ladevorrichtung, insbesondere eine Ladestation, für Elektrofahrzeuge, umfassend mindestens ein Gehäuse mit einem Boden, einer umlaufenden Seitenwand und mindestens einem lösbaren Schutzgehäusedeckel. Darüber hinaus betrifft die Anmeldung ein Gehäuse einer Ladevorrichtung.

Elektrische Ladevorrichtungen, beispielsweise in Form von Ladestationen, zum Laden von Elektrofahrzeugen sind bekannt. Eine elektrische Ladevorrichtung ist vorliegend insbesondere zumindest zum Abgeben von elektrischer Energie bzw. Leistung an ein Elektrofahrzeug eingerichtet. Unter einem Elektrofahrzeug ist anmeldungsgemäß ein Fahrzeug zu verstehen, das zumindest teilweise elektrisch betrieben werden kann und insbesondere einen wiederaufladbaren elektrischen Speicher umfasst.

Ladevorrichtungen weisen in der Regel ein Gehäuse auf. In dem Gehäuse kann mindestens ein elektrisches Leistungsmodul in Form einer elektrischen Leistungsschnittstelleneinrichtung mit einem ersten Leistungsanschluss zum Anschließen eines durch eine Gehäusewand des Gehäuses einführbaren Versorgungsnetzanschlusskabels angeordnet sein. An die Leistungsschnittstelleneinrichtung können über mindestens einen zweiten Leistungsanschluss weitere, in dem Gehäuse angeordnete elektrische Einrichtungen angeschlossen sein. Die Leistungsschnittstelleneinrichtung kann einen Stromfluss zwischen dem ersten Leistungsanschluss und dem mindestens einen zweiten Leistungsanschluss ermöglichen.

Beispielhafte und nicht abschließende elektrische Einrichtungen sind Zählereinrichtungen und/oder Ladeeinrichtungen, insbesondere umfassend Ladetechnik und eine Steckerbuchse, die ein Abgeben von elektrischer Energie bzw. Leistung an ein Elektrofahrzeug ermöglichen.

Bei bekannten Ladevorrichtungen befinden sich sämtliche Einrichtungen in dem gleichen Gehäuse. Eine derartige Anordnung ist jedoch mit Sicherheitsproblemen behaftet. Wenn beispielsweise im Rahmen einer Wartung oder Reparatur eine der zuvor genannten Einrichtungen in dem Gehäuse untersucht, repariert, gewartet und/oder ausgetauscht werden muss, sollte dies aufgrund der Leistungsschnittstelleneinrichtung nur von einem Fachmann und nur mit erhöhter Sorgfalt durchgeführt werden. Insbesondere aufgrund der hohen elektrischen Leistung (bzw. Spannung und Strom) an der Leistungsschnittstelleneinrichtung bzw. den Leistungsanschlüssen besteht die Gefahr von Stromunfällen bei unsachgemäßer Reparatur, Wartung etc.

Daher liegt der Anmeldung die Aufgabe zugrunde, eine Ladevorrichtung zum Laden von Elektrofahrzeugen bereitzustellen, welche die Sicherheit der Ladevorrichtung verbessert und insbesondere die Gefahr von Stromunfällen zumindest reduziert.

Die Aufgabe wird gemäß einem ersten Aspekt der Anmeldung durch eine Ladevorrichtung, insbesondere einer Ladestation, für Elektrofahrzeuge nach Anspruch 1 gelöst. Die Ladevorrichtung umfasst mindestens ein Gehäuse mit einem Boden, einer umlaufenden Seitenwand und mindestens einem lösbaren Schutzgehäusedeckel. Die Ladevorrichtung umfasst mindestens eine in dem Gehäuse angeordnete elektrische Leistungsschnittstelleneinrichtung mit mindestens einem ersten Leistungsanschluss, eingerichtet zum Anschließen mindestens eines in das Gehäuse einführbaren Versorgungsnetzanschlusskabels. In einem geschlossenen Zustand des Gehäuses verschließt der Schutzgehäusedeckel das Gehäuse. Der Schutzgehäusedeckel umfasst mindestens eine Öffnung zum Ermöglichen einer elektrischen Leistungsverbindungsherstellung zwischen mindestens einem zweiten Leistungsanschluss der elektrischen Leistungsschnittstelleneinrichtung und mindestens einem dritten Leistungsanschluss einer außerhalb des Gehäuses angeordneten Ladeeinrichtung in dem geschlossenen Zustand des Gehäuses.

Im Gegensatz zum Stand der Technik wird anmeldungsgemäß eine Ladevorrichtung mit einer erhöhten Sicherheit bereitgestellt, indem ein Gehäuse mit einem lösbaren Schutzgehäusedeckel versehen wird, wobei in dem Gehäuse die Leistungsschnittstelleneinrichtung angeordnet ist und eine elektrische Verbindung zwischen der Leistungsschnittstelleneinrichtung und einer weiteren (außerhalb des Gehäuses angeordneten) elektrischen Einrichtung (nur) über eine Öffnung in dem Schutzgehäusedeckel im geschlossenen Zustand des Gehäuses möglich ist.

Die anmeldungsgemäße Ladevorrichtung kann insbesondere eine Ladestation für Elektrofahrzeuge oder zumindest ein Teil einer Ladestation für Elektrofahrzeuge sein. Eine Ladestation ist zum elektrischen Laden von Elektrofahrzeugen eingerichtet. Beispielsweise kann die Ladestation über ein Ladekabel und/oder über eine elektrische Ladeeinrichtung, umfassend eine Ladesteckeraufnahme, z.B. in Form einer Steckerbuchse zum Anschließen eines Ladekabels eines Elektrofahrzeugs, verfügen. Über das Ladekabel kann dann mit einem Elektrofahrzeug elektrische Leistung (vorzugsweise bidirektional) ausgetauscht werden.

Eine anmeldungsgemäße Ladevorrichtung umfasst mindestens ein Gehäuse. Das mindestens eine Gehäuse ist eingerichtet, mindestens eine funktionale Leistungseinrichtung aufzunehmen und insbesondere zu umschließen. Das Gehäuse kann aus mindestens einem geeigneten Material, vorzugsweise Kunststoff, gebildet sein. Es versteht sich, dass auch andere Materialien alternativ oder zusätzlich verwendet werden können.

Ferner kann ein Gehäuse eine Mehrzahl von Gehäusewänden umfassen. So umfasst das Gehäuse einen (Gehäuse-)Boden und eine umlaufenden (Gehäuse-)Seitenwand. Gemäß einer bevorzugten Ausführungsform können der Boden und die umlaufende Seitenwand einstückig gebildet sein. Alternativ kann/können der Boden und/oder die umlaufende Seitenwand mehrstückig gebildet sein.

In dem Gehäuse ist als funktionale Leistungseinrichtung eine elektrische Leistungsschnittstelleneinrichtung angeordnet. Die Leistungsschnittstelleneinrichtung ist insbesondere zum elektrischen Verbinden der Ladevorrichtung mit einer Energiequelle, insbesondere in Form eines (öffentlichen) Stromnetzes, eingerichtet. Hierzu kann insbesondere ein Versorgungsnetzanschlusskabel in das Gehäuse, beispielsweise durch eine Kabelöffnung in der umlaufenden Seitenwand, einführbar sein.

Zumindest in einem bestimmungsgemäßen Zustand der Ladevorrichtung kann das Versorgungsnetzanschlusskabel mit einem ersten Leistungsanschluss der Leistungsschnittstelleneinrichtung elektrisch verbunden sein. Unter einem bestimmungsgemäßen Gebrauch ist vorliegend zu verstehen, dass die elektrische Ladevorrichtung betriebsbereit ist und insbesondere zumindest zum Laden eines Elektrofahrzeugs verwendet werden kann.

Die mindestens eine Kabelöffnung in der umlaufenden Seitenwand kann vorzugsweise während eines Installationsvorgangs hergestellt worden sein. Die Form und der Durchmesser der Kabelöffnung können zur Form und zum Durchmesser des Versorgungsnetzanschlusskabels korrespondieren.

Anmeldungsgemäß umfasst das Gehäuse einen lösbar angeordneten Schutzgehäusedeckel. Der Installationsvorgang, also insbesondere das elektrische Anschließen des Versorgungsnetzanschlusskabels an den ersten Leistungsanschluss, kann in einem geöffneten Zustand des Gehäuses durchgeführt werden. In diesem Zustand kann durch die von der umlaufenden Seitenwand gebildete Gehäuseöffnung das Versorgungsnetzanschlusskabel mit dem ersten Leistungsanschluss der Leistungsschnittstelleneinrichtung elektrisch verbunden werden.

Insbesondere nach dem Installationsvorgang kann das Gehäuse mittels des Schutzgehäusedeckels geschlossen bzw. verschlossen werden. In dem geschlossenen Zustand des Gehäuses verschließt der Schutzgehäusedeckel das Gehäuse und umschließt insbesondere die Leistungsschnittstelleneinrichtung. Nur durch eine Öffnung bzw. einen Durchgriff in dem Schutzgehäusedeckel kann eine elektrische Verbindung zu dem mindestens einen zweiten Leistungsanschluss der Leistungsschnittstelleneinrichtung hergestellt werden.

Der Schutzgehäusedeckel korrespondiert insbesondere zu der durch die umlaufende Seitenwand gebildeten Gehäuseöffnung. Insbesondere korrespondiert die äußere Kontur bzw. der Rand des Schutzgehäusedeckels zu dem Verlauf bzw. Rand der umlaufenden Seitenwand. Um eine elektrische Verbindung zwischen der elektrischen Leistungsschnittstelleneinrichtung und mindestens einer weiteren elektrischen Einrichtung zu ermöglichen, die außerhalb des anmeldungsgemäßen Gehäuses angeordnet ist, weist der Schutzgehäusedeckel mindestens eine Öffnung auf.

Die Öffnung ist insbesondere derart gebildet, dass eine elektrische Verbindung zwischen mindestens einem zweiten Leistungsanschluss und einem dritten Leistungsanschluss einer weiteren elektrischen Einrichtung in Form einer Ladeeinrichtung ermöglicht wird. Die Ladeeinrichtung ist außerhalb des anmeldungsgemäßen Gehäuses angeordnet. Die Ladeeinrichtung kann beispielsweise Ladetechnik, eine Steckerbuchse (bzw. Ladesteckeraufnahme) und dergleichen umfassen.

Vorzugsweise kann die mindestens eine Öffnung, insbesondere die Form und Größe der mindestens einen Öffnung, zu dem mindestens einen zweiten Leistungsanschluss und/oder zu dem dritten Leistungsanschluss korrespondieren. Hierunter ist insbesondere zu verstehen, dass die Größe und Form der mindestens einen Öffnung zu der Form und Größe der Leistungsanschlüsse korrespondiert. Insbesondere ist die Öffnung derart gebildet, dass nur eine zuvor beschriebene elektrische Verbindung herstellbar ist, ohne eine Zugriffsmöglichkeit auf das (weitere) Gehäuseinnere zu erlauben.

Unter einem Leistungsanschluss ist vorliegend insbesondere ein elektrischer Anschluss zu verstehen, der zum Übertragen von elektrischer Leistung zum Laden eines Elektrofahrzeugs eingerichtet ist Die von der Ladevorrichtung bereitgestellte Ladeleistung kann zumindest 11 kW betragen. Es versteht sich, dass für andere Verbraucher der Ladevorrichtung die übertragbare Leistung auch geringer (z.B. zumindest 1 kW) sein kann.

Unter einem lösbaren Schutzgehäusedeckel ist anmeldungsgemäß insbesondere zu verstehen, dass der Schutzgehäusedeckel zerstörungsfrei von dem restlichen Gehäuse (insbesondere der umlaufenden Seitenwand) zumindest teilweise getrennt, insbesondere abgenommen, und wieder eingesetzt werden kann. Insbesondere kann dies durch eine manuelle Aktion eines Nutzers erfolgen.

Der Schutzgehäusedeckel verschließt in dem geschlossenen Zustand des Gehäuses das Gehäuse derart, dass der Schutzgehäusedeckel einen elektrischen Berührschutz bereitstellt. Indem ein elektrischer Berührschutz bereitgestellt werden, kann die Sicherheit signifikant erhöht werden. Weitere elektrische Einrichtungen, die (nur) über die mindestens eine Öffnung in dem Schutzgehäusedeckel elektrisch koppelbar sind, können in sicherer Weise gewartet, repariert, ausgetauscht etc. werden, da zu der Leistungsschnittstelleneinrichtung ein Berührschutz vorgesehen ist Ein elektrischer Kontakt zwischen einem Nutzer und eines in dem Gehäuse angeordneten Leistungsmoduls kann verhindert werden.

Darüber hinaus kann gemäß einer weiteren Ausführungsform der anmeldungsgemäßen Ladevorrichtung die elektrische Leistungsschnittstelleneinrichtung mindestens einen weiteren zweiten Leistungsanschluss umfassen. Die mindestens eine Öffnung (oder eine weitere Öffnung) kann zum Ermöglichen einer elektrischen Leistungsverbindungsherstellung zwischen dem weiteren zweiten Leistungsanschluss und mindestens einem vierten elektrischen Leistungsanschluss eingerichtet sein. Der weitere zweite Leistungsanschluss kann zum (internen) Versorgen mindestens eines elektrischen Verbrauchers der Ladevorrichtung mit elektrischer Energie eingerichtet ist. Insbesondere kann die Leistungsschnittstelleneinrichtung zumindest zwei separate zweite Leistungsanschlüsse umfassen, um über den ersten zweiten Leistungsanschluss elektrische Leistung zum Laden eines Elektrofahrzeugs bereitzustellen und über einen zweiten bzw. weiteren zweiten Leistungsanschluss eine interne Stromversorgung für die elektrischen Verbraucher (Display, Sendemodule, Zähler etc.) der Ladevorrichtung bereitzustellen. Indem auch diese elektrische Verbindung durch die mindestens eine Öffnung hergestellt werden kann, kann eine hohe Sicherheit zur Verfügung gestellt werden.

Ferner kann die Leistungsschnittstelleneinrichtung mindestens einen noch weiteren zweiten Leistungsanschluss umfassen. Die mindestens eine Öffnung kann zum Ermöglichen einer elektrischen Leistungsverbindungsherstellung zwischen dem noch weiteren zweiten Leistungsanschluss und mindestens einem fünften elektrischen Leistungsanschluss eingerichtet sein. Der noch weitere zweite Leistungsanschluss kann zum Anschließen einer (weiteren) Zählereinrichtung eingerichtet sein.

Gemäß einer bevorzugten Ausführungsform der Ladevorrichtung kann mindestens einer der zweiten Leistungsanschlüsse eine Steckerbuchse mit einer Mehrzahl von ersten Kontakten sein. Zumindest der dritte Leistungsanschluss und/oder der vierte Leistungsanschluss (und/oder der fünfte Leistungsanschluss) kann ein Stecker mit einer Mehrzahl von zweiten Kontakten sein, die zu den ersten Kontakten korrespondieren, derart, dass in einem verbundenen Zustand ein Leistungsfluss (bzw. Stromfluss) über die mindestens eine hergestellte elektrische Leistungsverbindung, insbesondere eine Leistungssteckverbindung, ermöglicht wird. Die zweiten Kontakte des mindestens einen Steckers des dritten und/oder vierten Leistungsanschlusses korrespondieren insbesondere elektrisch und mechanisch zu dem ersten und/oder weiteren zweiten Leistungsanschluss der Leistungsschnittstelleneinrichtung. Eine Leistungssteckverbindung kann durch eine Öffnung in dem Schutzgehäusedeckel in besonders einfacher Weise hergestellt werden.

Wie bereits beschrieben wurde, wird durch den Schutzgehäusedeckel die Sicherheit bereits signifikant gesteigert. In einem unverbundenen Zustand der Leistungssteckverbindung, also wenn der Stecker und die Steckerbuchse nicht miteinander (elektrisch und mechanisch) gekoppelt sind, kann jedoch an den ersten Kontakten der Steckerbuchse eine Spannung anliegen. Aufgrund der Möglichkeit, dass auch in einem unverbundenen Zustand der Ladesteckverbindung an den ersten Kontakten der Steckerbuchse eine Spannung anliegen kann, wird anmeldungsgemäß gemäß einer besonders bevorzugten Ausführungsform vorgeschlagen, dass die Steckerbuchse mindestens eine verschiebbare Schutzplatte mit einer Mehrzahl von Plattenöffnungen aufweist, die zu Kontaktöffnungen der ersten Kontakte korrespondieren. Die Schutzplatte kann eingerichtet sein, in einem unverbundenen Zustand (des Steckers und der Steckerbuchse) die Kontaktöffnungen der ersten Kontakte zu verschließen. Die Schutzplatte kann eingerichtet sein, derart mit dem Stecker zusammenzuwirken, dass durch ein Einführen des Steckers in die Steckerbuchse eine Verschiebung der Schutzplatte derart bewirkt werden kann, dass die zweiten Kontakte durch die Öffnungen der Schutzplatte in die Kontaktöffnungen der ersten Kontakte einführbar sind. Hierdurch kann ein so genannter Drahtschutz bereitgestellt und damit die Sicherheit noch weiter verbessert werden. Unter einem Drahtschutz ist zu verstehen, dass im unverbundenen Zustand (des Steckers und der Steckerbuchse) ein leitfähiger Draht nicht (versehentlich) in eine Kontaktöffnung eingeführt werden kann. Gleichzeitig kann anmeldungsgemäß das Einführen des Steckers in die Steckerbuchse nicht erschwert sein, da der Stecker mit der Schutzplatte derart zusammenwirkt, dass während des Einführvorgangs eine automatische Verschiebung der Schutzplatte bewirkt werden kann und dadurch die Kontaktöffnungen freigegeben werden können. In die automatisch freigegebenen Kontaktöffnungen können dann die zweiten Kontakte eingeführt werden.

Um in einem unverbundenen Zustand der Leistungssteckverbindung eine ausreichende Sicherheit bereitzustellen, kann die Steckerbuchse der Leistungsschnittstelleneinrichtung insbesondere an ihrer Oberseite anmeldungsgemäß eine verschiebbare Schutzplatte aufweisen. Die Schutzplatte ist insbesondere beweglich gelagert und kann insbesondere parallel zu der Oberfläche der Steckerbuchse, in der die Kontaktöffnungen der ersten Kontakte liegen, verschoben werden. Vorzugsweise kann die Schutzplatte aus einem Kunststoffmaterial hergestellt sein.

Die Schutzplatte kann eine Mehrzahl von Plattenöffnungen aufweisen. Die Mehrzahl von Plattenöffnungen korrespondiert insbesondere hinsichtlich der Anzahl, Lage und/oder Form zu der Anzahl, Lage und/oder Form der Kontaktöffnungen der ersten Kontakte. So kann der Durchmesser einer bestimmten Plattenöffnung beispielsweise im Wesentlichen dem Durchmesser (oder größer) der hierzu korrespondieren Kontaktöffnung entsprechen. In einem verbundenen Zustand der Leistungssteckverbindung können die Kontaktöffnungen der ersten Kontakte durch Überlagerung mit den entsprechenden Plattenöffnungen der Schutzplatte freigegeben bzw. geöffnet sein.

In einem unverbundenen Zustand der Leistungssteckverbindung ist die Schutzplatte eingerichtet, vorzugsweise sämtliche Kontaktöffnungen der ersten Kontakte des mindestens einen zweiten Leistungsanschlusses insbesondere vollständig zu verschließen bzw. abzudecken. Mit anderen Worten kann die Schutzplatte gegenüber dem verbundenen Zustand derart verschoben sein, dass die Kontaktöffnungen der ersten Kontakte verschlossen sind.

Darüber hinaus kann die Schutzplatte eingerichtet sein, dass durch ein Einführen, also eine Einführbewegung während des Einführvorgangs, des Steckers in die Steckerbuchse automatisch eine Verschiebung der Schutzplatte von der verschlossenen Position in die freigegebene Position aufgrund der Wirkverbindung zwischen Stecker und Schutzplatte während des Einführvorgangs bewirkt wird. Hierdurch wird insbesondere bewirkt, dass die zweiten Kontakte durch die Plattenöffnungen der Schutzplatte in die Kontaktöffnungen der ersten Kontakte einführbar sind. Eine einfache Montierung, insbesondere Herstellung, der mechanischen und elektrischen Kopplung des Steckers mit der Steckerbuchse kann anmeldungsgemäß bereitgestellt werden.

Gemäß einer weiteren Ausführungsform der anmeldungsgemäßen Ladevorrichtung kann in dem Gehäuse mindestens eine Kommunikationsschnittstelleneinrichtung angeordnet sein. Der Schutzgehäusedeckel kann mindestens eine Öffnung (z.B. die zuvor beschriebene Öffnung oder vorzugsweise mindestens eine weitere Öffnung) zum Ermöglichen einer kontaktbehafteten Kommunikationsverbindungsherstellung zwischen mindestens einem ersten Kommunikationsanschluss der Kommunikationsschnittstelle und mindestens einem zweiten Kommunikationsanschluss einer außerhalb des Gehäuses angeordneten Verarbeitungseinheit umfassen.

Vorzugsweise kann neben der mindestens einen Leistungsschnittstelleneinrichtung auch mindestens eine Kommunikationsschnittstelleneinrichtung in dem Gehäuse angeordnet und insbesondere im geschlossenen Zustand umschlossen sein. Hierdurch kann bei einem Installationsvorgang zunächst eine Verkabelung der Ladevorrichtung mit sämtlichen externen, von der Ladevorrichtung benötigten Kabeln durchgeführt werden. So kann zumindest in einem bestimmungsgemäßen Zustand der Ladevorrichtung mindestens ein Datenkabel an einem dritten Kommunikationsanschluss der Kommunikationsschnittstelleneinrichtung angeschlossen sein. Das Datenkabel kann z.B. durch eine Seitenwand des Gehäuses einführbar sein. Eine Kommunikationsverbindung von einem außerhalb des Gehäuses angeordneten Kommunikationselement mit der Kommunikationsschnittstelleneinrichtung kann über die mindestens eine Öffnung, vorzugsweise mindestens eine weitere Öffnung, des Schutzgehäusedeckels herstellbar sein. Beispielsweise kann eine Kommunikationssteckverbindung herstellbar sein. Die Sicherheit kann noch weiter verbessert werden. Ferner kann der Installationsvorgang weiter verbessert werden.

Das Gehäuse weist mindestens ein erstes Befestigungsmittel auf, das zu mindestens einem weiteren Befestigungsmittel eines weiteren Gehäuses der Ladevorrichtung korrespondiert. Indem weiteren Gehäuse ist zumindest die Ladeeinrichtung (z.B. die Ladetechnik mit
einer Ladebuchse) angeordnet. Weitere elektrische Einrichtungen, wie die mindestens eine Verarbeitungseinheit, können in dem weiteren Gehäuse angeordnet und von diesem insbesondere umschlossen sein. Das weitere Gehäuse ist mit dem ersten Gehäuse derart befestigt, dass der Gehäuseschutzdeckel vor einem Zugriff in einem befestigten Zustand geschützt ist. In sicherer Weise können elektrische Einrichtungen in dem weiteren Gehäuse gewartet, repariert, ausgetauscht etc. werden.

In einer weiteren Ausführungsform der anmeldungsgemäßen Ladevorrichtung kann der Gehäuseschutzdeckel eine Mehrzahl von Öffnungen aufweisen. Insbesondere kann eine erste Öffnung zum Ermöglichen der elektrischen Leistungsverbindungsherstellung zwischen mindestens dem zweiten Leistungsanschluss der elektrischen Leistungsschnittstelleneinrichtung und dem dritten Leistungsanschluss der Ladeeinrichtung, wie einer Ladebuchse, eingerichtet sein. Mindestens eine zweite Öffnung kann zum Ermöglichen der kontaktbehafteten Kommunikationsverbindungsherstellung zwischen mindestens dem ersten Kommunikationsanschluss und dem zweiten Kommunikationsanschluss vorgesehen sein.

Ferner kann bei einer Ausführungsform der Gehäuseschutzdeckel mindestens eine beweglich mit dem Gehäuseschutzdeckel verbundene Klappe aufweisen, eingerichtet zum Verschließen mindestens einer Öffnung (z.B. der ersten oder zweiten Öffnung) des Gehäuseschutzdeckels. Wenn beispielsweise eine Leistungsverbindung oder Kommunikationsverbindung nicht hergestellt ist, kann die entsprechende Öffnung durch die mindestens eine Klappe verschließbar sein. Die Klappe kann über ein Scharnier oder dergleichen mit dem Gehäuseschutzdeckel verbunden sein und insbesondere zwischen einer geschlossenen und offenen Position bewegbar sein. Die Sicherheit kann noch weiter verbessert werden.

Gemäß einer bevorzugten Ausführungsform kann das Gehäuse in dem geschlossenen Zustand mindestens eine mit der elektrischen Leistungsschnittstelleneinrichtung koppelbare (erste) Zählereinrichtung aufweist. Die Zählereinrichtung kann ein Stromzähler, insbesondere ein intelligenter Stromzähler (Smart Meter) sein. Die Zählereinrichtung kann insbesondere zum Erfassen der gesamten von der Ladevorrichtung, insbesondere der Ladestation, verbrauchten elektrischen Energie (und/oder Strom und/oder Leistung). Mit anderen Worten kann insbesondere die an ein Elektrofahrzeug abgegebenen Strommenge und die von den internen Verbrauchern der Ladestation verbrauchte Strommengen von der Zählereinrichtung erfasst werden. Zur Kopplung kann eine elektrische Verbindung zwischen der Zählereinrichtung und der Leistungsschnittstelleneinrichtung angeordnet sein. Mit anderen Worten kann eine Zählereinrichtung in dem Gehäuse eingehaust sein, während andere elektrische Einrichtungen, insbesondere die Ladeeinrichtung, außerhalb des Gehäuses angeordnet sein können. Dieser Aspekt der Anmeldung ist insbesondere eigenständig erfinderisch.

Besonders bevorzugt kann/können der Boden, die umlaufende Seitenwand und/oder der lösbare Schutzgehäusedeckel mindestens ein transparentes Sichtfenster aufweisen. Das Sichtfenster kann insbesondere derart angeordnet sein, dass eine Anzeige einer Zählereinrichtung durch das Sichtfenster sichtbar ist. Indem ein Sichtfenster angeordnet ist, kann eine Zählereinrichtung, insbesondere das eine Anzeige (z.B. ein Display) in einfacher Weise abgelesen werden. Ein Öffnen des Gehäuses ist nicht erforderlich. Eine vorzugsweise vorgesehene Verplombung des Gehäuses muss nicht geöffnet werden. Auf der Anzeige können insbesondere zumindest erfasste Verbrauchsdaten, wie die erfasste Strommenge, die erfasste Leistung etc. angezeigt werden. Dieser Aspekt der Anmeldung ist insbesondere eigenständig erfinderisch.

Um eine Manipulation der Leistungsschnittstelleneinrichtung und insbesondere einer optionalen Zählereinrichtung (oder der Kommunikationsschnittstelleneinrichtung) zu verhindern oder zumindest das Risiko zu minimieren, kann die Ladevorrichtung gemäß einer weiteren Ausführungsform mindestens eine Verplombungseinrichtung umfassen, eingerichtet zum Verplomben des Gehäuseschutzdeckels mit der Seitenwand des Gehäuses und/oder dem Boden des Gehäuses in einem geschlossenen Zustand des Gehäuses. Durch die Verplombung kann sichergestellt werden, dass das Gehäuse, insbesondere der Gehäuseschutzdeckel, nur von berechtigten Personen geöffnet wird. Der Manipulationsschutz und die Qualitätssicherung kann verbessert werden.

Ein weiterer Aspekt der vorliegenden Anmeldung ist ein Gehäuse einer Ladevorrichtung, insbesondere einer zuvor beschriebenen Ladevorrichtung. Das Gehäuse umfasst mindestens eine elektrische Leistungsschnittstelleneinrichtung mit mindestens einem ersten Leistungsanschluss, eingerichtet zum Anschließen mindestens eines in das Gehäuse einführbaren Versorgungsnetzanschlusskabels. Das Gehäuse umfasst mindestens einen Boden, eine umlaufende Seitenwand und einen lösbaren Schutzgehäusedeckel. In einem geschlossenen Zustand des Gehäuses verschließt der Schutzgehäusedeckel das Gehäuse. Der Schutzgehäusedeckel umfasst mindestens eine Öffnung zum Ermöglichen einer elektrischen Leistungsverbindungsherstellung zwischen mindestens einem zweiten Leistungsanschluss der elektrischen Leistungsschnittstelleneinrichtung und mindestens einem dritten Leistungsanschluss einer außerhalb des Gehäuses angeordneten Ladeeinrichtung.

Die Merkmale der elektrischen Ladevorrichtungen und Gehäuse sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die anmeldungsgemäße elektrische Ladevorrichtung, das anmeldungsgemäße Verfahren und das anmeldungsgemäße Gehäuse auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiel einer anmeldungsgemäßen Ladevorrichtung in einem geöffneten Zustand des Gehäuses,
- Fig. 2a: eine schematische Ansicht eines weiteren Ausführungsbeispiels einer anmeldungsgemäßen Ladevorrichtung in einem geschlossenen Zustand des Gehäuses in einem unverbundenen Zustand der Leistungssteckverbindung,
- Fig. 2b: eine schematische Ansicht des Ausführungsbeispiel nach Figur 2a in einem verbundenen Zustand der Leistungssteckverbindung,
- Fig. 3: eine schematische Ansicht eines weiteren Ausführungsbeispiels einer anmeldungsgemäßen Ladevorrichtung, und
- Fig. 4: eine schematische Ansicht eines weiteren Ausführungsbeispiels einer anmeldungsgemäßen Ladevorrichtung.

Nachfolgend werden für gleiche Elemente gleiche Bezugszeichen verwendet.

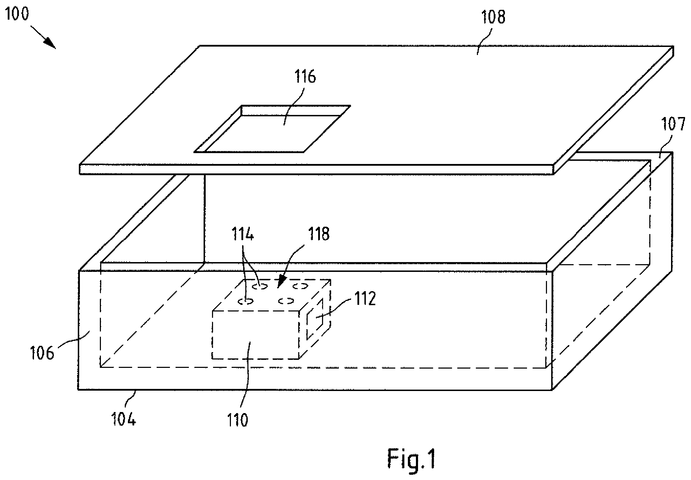

Die Figur 1 zeigt eine schematische Ansicht eines Ausführungsbeispiels einer Ladevorrichtung 100 gemäß der vorliegenden Anmeldung. Die Ladevorrichtung 100 umfasst ein Gehäuse 102 mit einem Boden 104, einer umlaufenden Seitenwand 106 und einem lösbaren bzw. abnehmbaren Gehäuseschutzdeckel 108. Die Ladevorrichtung 100, insbesondere das Gehäuse 102, ist in einem geöffneten Zustand dargestellt. Die Ladevorrichtung 100 und das Gehäuse 102 sind insbesondere ein Teil einer Ladestation zum Laden von Elektrofahrzeugen.

Das Gehäuse 102 kann vorzugsweise aus Kunststoff gebildet sein. Es versteht sich, dass auch andere Materialien alternativ oder zusätzlich eingesetzt werden können. In dem Gehäuseinneren kann zumindest eine elektrische Leistungseinrichtung 110 in Form einer elektrischen Leistungsschnittstelleneinrichtung 110 angeordnet sein. Die elektrische Leistungsschnittstelleneinrichtung 110 kann insbesondere in dem Gehäuse 100 integriert und von einer Mehrzahl von Gehäusewänden umschlossen sein.

Der Boden 104 und die umlaufende Seitenwand 106 des Gehäuses 102 sind vorzugsweise einstückig gebildet. Es versteht sich, dass sie bei anderen Varianten der Anmeldung auch mehrstückig gebildet sein können.

Die elektrische Leistungsschnittstelleneinrichtung 110 umfasst vorliegend einen ersten Leistungsanschluss 112, eingerichtet zum Anschließen eines (nicht gezeigten) Versorgungsnetzanschlusskabels, um die Ladevorrichtung 100 mit einer (nicht gezeigten) Stromquelle (vorzugsweise ein Stromnetz) elektrisch zu verbinden.

Ferner umfasst die Leistungsschnittstelleneinrichtung 110 vorliegend mindestens einen zweiten Leistungsanschluss 118 in Form einer Mehrzahl von ersten Kontakten 114. Vorliegend ist der zweite Leistungsanschluss 118 in Form einer Steckerbuchse 118 gebildet. Es versteht sich, dass bei anderen Varianten der Anmeldung der mindestens eine zweite Leistungsanschluss 118 andere Formen aufweisen kann.

Wie zu erkennen ist, umfasst der Schutzgehäusedeckel 108 mindestens eine Öffnung 116. Die Öffnung 116 ist dazu eingerichtet und insbesondere derart positioniert und geformt, dass in einem geschlossenen Zustand des Gehäuses 102, also wenn der Schutzgehäusedeckel 108 beispielsweise auf dem Rand 107 der umlaufenden Seitenwand 106 aufliegt, eine Leistungsverbindung zwischen dem zweiten Leistungsanschluss 118 der elektrischen Leistungsschnittstelleneinrichtung 110 und mindestens einem (nicht gezeigten) dritten Leistungsanschluss einer außerhalb des Gehäuses angeordneten Ladeeinrichtung durch die Öffnung 116 hergestellt werden kann.

Insbesondere ist die Öffnung 116 oberhalb des zweiten Leistungsanschlusses 118 angeordnet, so dass der zweite Leistungsanschluss 118 durch die Öffnung 116 auch bei geschlossenem Gehäuse 100 sichtbar und insbesondere kontaktierbar ist. Die übrigen Bereiche des Gehäuseinneren sind vorzugsweise von dem Schutzgehäusedeckel 108 in dem geschlossenen Zustand abgedeckt bzw. verschlossen. Mit anderen Worten ist der Zugang zu den übrigen Bereichen des Gehäuseinneren durch den Schutzgehäusedeckel 108 gesperrt. Die Form und die Kontur der Öffnung 116 korrespondieren insbesondere zu der Form und Kontur des zweiten Leistungsanschlusses 118. Insbesondere kann die Öffnung nur so groß sein, dass nur ein elektrischer Kontakt zwischen dem zweiten und dem dritten Leistungsanschluss möglich ist.

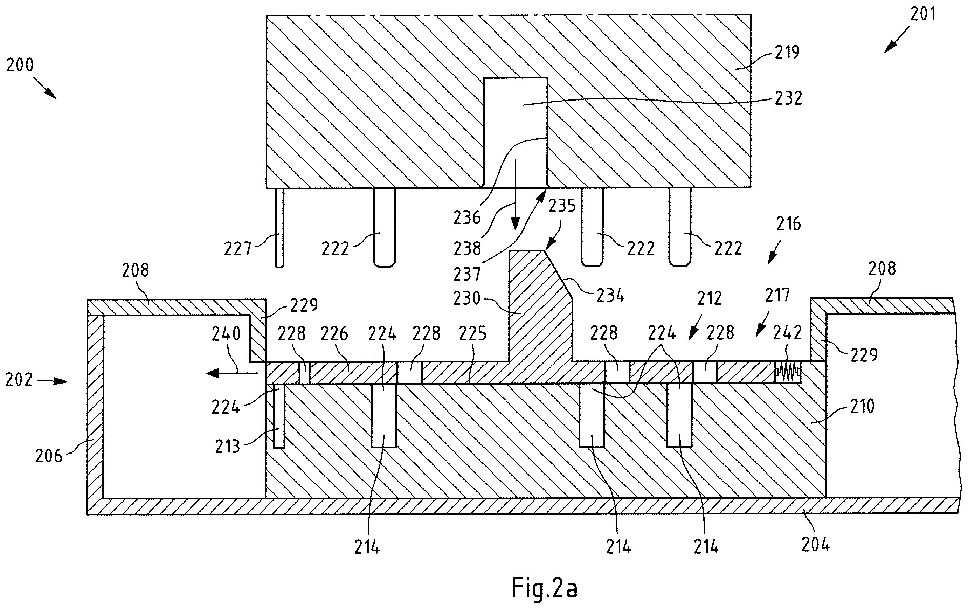

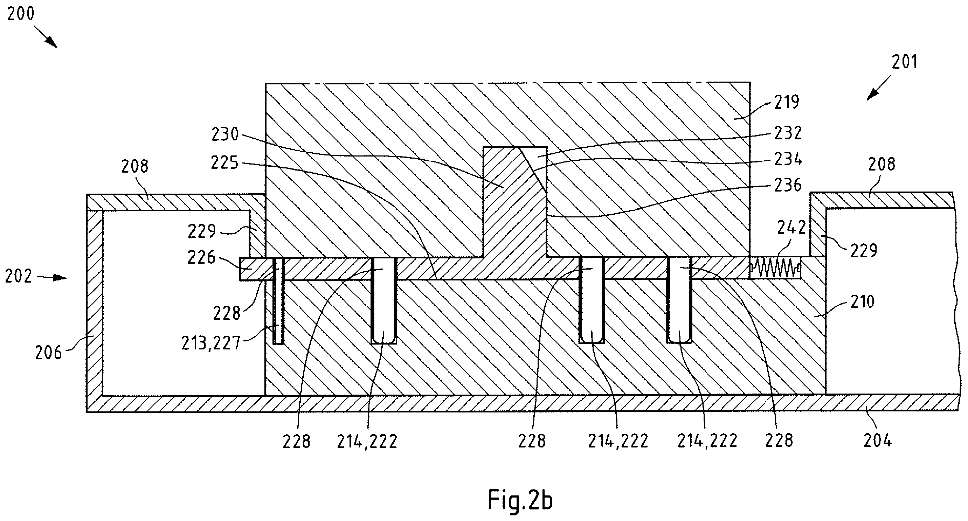

Die Figuren 2a und 2b zeigen schematische Ansichten eines weiteren Ausführungsbeispiels einer Ladevorrichtung 200. Zur Vermeidung von Wiederholungen werden nachfolgend im Wesentlichen nur die Unterschiede zu dem Ausführungsbeispiel nach Figur 1 beschrieben. Insbesondere zeigen die Figuren 2a und 2b eine Ladevorrichtung 200 in einem geschlossenen Zustand des Gehäuses 202 mit einer Leistungssteckverbindung 201 in einem unverbundenen Zustand (Fig. 2a) und die Ladevorrichtung 200 in einem geschlossenen Zustand des Gehäuses 202 mit der Leistungssteckverbindung 201 in einem verbundenen Zustand (Fig. 2b).

Die Leistungssteckverbindung 201 umfasst einen Stecker 219 und eine zu dem Stecker 219 korrespondierende Steckerbuchse 217 der elektrischen Leistungsschnittstelleneinrichtung 210. Hierunter ist zu verstehen, dass der Stecker 219 elektrisch und mechanisch mit der Steckerbuchse 217 koppelbar ist.

Der Stecker 219 umfasst eine Mehrzahl von zweiten Kontakten 221, 222, insbesondere in Form von zweiten Kontaktstiften 221, 222. Beispielhaft sind vorliegend vier zweite Kontakte 221, 222 dargestellt. Es versteht sich, dass auch mehr oder weniger Kontakte 222 vorgesehen sein können. Der Stecker 219 kann insbesondere einen dritten Leistungsanschluss (in Form der Kontakte 222) und einen vierten Leistungsanschluss (in Form des mindestens einen Kontakts 221, vorzugsweise sind eine Mehrzahl von Kontakten 221 vorgesehen) bilden bzw. bereitstellen. Der dritte Leistungsanschluss dient der Energieversorgung einer (nicht gezeigten) Ladeeinrichtung, eingerichtet zumindest zum Laden von Elektrofahrzeugen. Der vierte Leistungsanschluss kann zur internen Stromversorgung der (nicht gezeigten) Verbraucher (Displays, Verarbeitungseinheiten, Zähler etc.) der Ladevorrichtung 200 eingerichtet sein.

Darüber hinaus umfasst der Stecker 219 ein Steckerführungsmodul 232, welches gemäß einer bevorzugten Ausgestaltung vorliegend als Aufnahme 232 gebildet ist. Die Aufnahme 232 kann mindestens eine zweite Anschlagsfläche 236 aufweisen, die vorliegend durch eine Seitenwand der Aufnahme 232 gebildet sein kann. Insbesondere kann die Anschlagsfläche 236 eine Anschlagskante 237 aufweisen, um eine korrespondierende erste Anschlagsfläche 234 während des Einführvorgangs des Steckers 219 in die Steckerbuchse 217 zumindest abschnittsweise zu kontaktieren. Die Funktion des dargestellten Steckerführungsmoduls 232 wird nachfolgend noch näher beschrieben.

Die Steckerbuchse 217 der Leistungsschnittstelleneinrichtung 210 umfasst eine Mehrzahl von ersten Kontakten 213, 214, die jeweils eine Kontaktöffnung 224 aufweisen. Die ersten Kontakte 213, 214 korrespondieren hierbei zu den zweiten Kontakten 221, 222. Mit anderen Worten können die zweiten Kontaktstifte 221, 222 in die ersten Kontakte 213, 214 bzw. deren Kontaktöffnungen 224 eingesetzt werden, um einen Stromfluss von den ersten Kontakten 213, 214 zu den zweiten Kontakten 221, 222 (oder in umgekehrter Richtung) zu ermöglichen. Die Steckerbuchse 217 stellt vorliegend zwei zweite Leistungsanschlüsse (in Form des mindestens einen ersten Kontakts 213 und in Form der weiteren ersten Kontakte 214) zur Verfügung.

Darüber hinaus weist die Steckerbuchse 217 eine verschiebbare Schutzplatte 226 auf. Die Schutzplatte 226 ist insbesondere beweglich an der Oberseite 225 der Steckerbuchse 217 gelagert, so dass sie in eine Verschieberichtung 240 verschiebbar ist. Beispielsweise kann die Steckerbuchse 217 über eine (nicht gezeigte) Nut zur Führung der Schutzplatte 226 verfügen.

Die verschiebbare Schutzplatte 226 (auch shutter genannt) weist eine Mehrzahl von Plattenöffnungen 228 auf. Die Plattenöffnungen 228 der Schutzplatte 226 korrespondieren zu den Kontaktöffnungen 224 der ersten Kontakte 213, 214. Hierunter ist insbesondere zu verstehen, dass die Lage der Plattenöffnungen 228 zueinander zu der Lage der Kontaktöffnungen 224 zueinander korrespondiert, die Anzahl der Plattenöffnungen 228 der Anzahl der Kontaktöffnungen 224 entspricht (es versteht sich, dass auch mehr Plattenöffnungen vorgesehen sein können) und die Form, insbesondere der Durchmesser, der Plattenöffnungen 228, im Wesentlichen identisch mit der Form, insbesondere dem Durchmesser, der Kontaktöffnungen 224 ist.

Wie ferner aus den Figuren 2a und 2b zu entnehmen ist, weist die Steckerbuchse 217, insbesondere die Schutzplatte 226, ein Buchsenführungsmodul 230 auf. Das Buchsenführungsmodul 230 korrespondiert (von seiner Form und Lage bzw. Position auf der Oberseite der Schutzplatte 226) zu dem Steckerführungsmodul 232 des Steckers 219. Das Buchsenführungsmodul 230 ist vorliegend gemäß einer bevorzugten Ausgestaltung als Vorsprung 230 gebildet, der an der Oberfläche der Schutzplatte 226 angeordnet ist. Der (mindestens eine) Vorsprung 230 erstreckt sich hierbei von der Oberfläche der Schutzplatte 226 parallel zur Einführrichtung 238.

Der Vorsprung 230 weist eine erste Anschlagsfläche 234 auf. Hierbei ist die erste Anschlagsfläche 234 insbesondere durch eine Verjüngung, beispielsweise eine Abschrägung, des Vorsprungs 230 in Richtung des freien Endes des Vorsprungs 230 gebildet. Die Anschlagsfläche 234 ist insbesondere durch eine schräg ausgebildete Seitenfläche des Vorsprungs 230 gebildet. Hierunter ist zu verstehen, dass der Winkel zwischen der Verschiebeebene (oder hier die Oberfläche der Schutzplatte 226) kleiner als 90° ist (z.B. zwischen 5° und 85°, insbesondere zwischen 15° und 75°).

Darüber hinaus ist mindestens ein Rückstellelement 242 an der Schutzplatte 226 befestigt. Vorliegend ist das Rückstellelement 242 ein Federelement, welches insbesondere zwischen der Steckerbuchse 217 und der Schutzplatte 226 angeordnet und an den entsprechenden Elementen befestigt ist. Das Rückstellelement 242 ist eingerichtet, eine Kraft auf die Schutzplatte 226 in entgegengesetzter Verschieberichtung 240 auszuüben. Hierdurch kann in automatischer Weise erreicht werden, dass in dem unverbundenen Zustand (Fig. 2a) die ersten Kontakte 213, 214 bzw. deren Kontaktöffnungen 224 durch die Schutzplatte 226 verschlossen sind.

Um von dem unverbundenen Zustand der Leistungssteckverbindung 201 in den verbundenen Zustand der Leistungssteckverbindung 201 zu gelangen, wird der Stecker 219 vorzugsweise während eines Einführvorgangs in Einführrichtung, beispielsweise von einem Nutzer, bewegt. Durch dieses Einführen greift der Vorsprung 230 in die Aufnahme 232 ein. Hierbei kann der Stecker 219 gegenüber der Steckerbuchse 217 (durch nicht gezeigte Mittel) zunächst derart ausgerichtet sein, dass die zweite Anschlagsfläche 236 abschnittsweise die erste Anschlagsfläche 234 kontaktiert. Mit anderen Worten wird während des Einführvorgangs eine Wirkverbindung zwischen Stecker 219 und Schutzplatte 226 hergestellt. So kann vorzugsweise ein erster Kontakt durch das Einführen im Bereich der Anschlagskante 237 der zweiten Anschlagsfläche 236 und dem Anschlagsbereich 235 der ersten Anschlagsfläche 234 erfolgen.

Durch das weitere Einführen des Steckers 219 in Einführrichtung 238 wird aufgrund der Ausbildung der ersten Anschlagsfläche 234 als Schräge eine Verschiebung der Schutzplatte 226 in Verschieberichtung 240 bewirkt. Insbesondere wird eine Kraftumlenkung von der Einführrichtung 238 in die Verschieberichtung 240 durch die dargestellte Zusammenwirkung von Stecker 219 und Steckerbuchse 217 bereitgestellt. Die Anschlagsflächen 234, 236 können derart aufeinander abgestimmt sein, dass ein bestimmter (gewünschte) Verschiebeweg l erreicht wird. Mit anderen Worten ist das Buchsenführungsmodul 230 insbesondere derart auf das Steckerführungsmodul 232 abgestimmt, dass die Schutzplatte 226 (genau) so weit in Verschieberichtung 240 durch das Einführen des Steckers 219 verschoben wird, dass die Kontaktöffnungen 224 durch die Plattenöffnungen 228 der Schutzplatte 226 zugänglich sind. Insbesondere sind die Kontaktöffnungen 224 derart zugänglich bzw. freigegeben, dass die zweiten Kontakte 221, 222 in die ersten Kontakte 213, 214 eingeführt bzw. eingesetzt werden können. Dieser verbundene Zustand ist hierbei in der Figur 2b dargestellt.

Es versteht sich, dass die durch das Einführen des Steckers 219 ausgeübte Kraft die von dem Rückstellelement 242 ausgeübte Kraft übersteigen muss. Es versteht sich ferner, dass für das Bewirken der Verschiebung der Schutzplatte 226 in Verschieberichtung 240 der Stecker 219 während des Einführens (nahezu) keine Verschiebung in Verschieberichtung 240 durchführen darf. Entsprechende (nicht gezeigte) Fixierungsmittel, z.B. Anschlagsflächen, die eine entsprechende Bewegung verhindern, können an dem Gehäuse 202 der Ladeanordnung 200 und/oder der Leistungssteckverbindung 201 vorgesehen sein. Schließlich versteht es sich, dass gemäß anderen Varianten der Anmeldung andere Formen von Vorsprüngen, Aufnahmen etc. vorgesehen sein können.

Bei einer Trennung des Steckers 219 von der Steckerbuchse 217 wird der Stecker 219 insbesondere durch ein manuelles Ausführen aus der Steckerbuchse 217 von der selbigen getrennt. Das angeordnete Rückstelleelement 242 bewirkt eine automatische Verschließung der Kontaktöffnungen 224.

Wie ferner aus den Figuren 2a und 2b zu entnehmen ist, ist das Gehäuse 202 in einem geschlossenen Zustand dargestellt. Insbesondere ist der Schutzgehäusedeckel 208 auf den Enden bzw. dem Rand der Seitenwand 206 angeordnet. Die zuvor beschriebene Leistungssteckverbindung 201 kann durch die Öffnung 216 des Schutzgehäusedeckels 208 hergestellt werden. Die Öffnung 216 ist vorliegend auf die herzustellende Leistungssteckverbindung 201, insbesondere auf die Dimensionen des Steckers 219 und der Steckerbuchse 217, abgestimmt. Vorzugsweise entspricht der Durchmesser der Öffnung 216 im Wesentlichen dem äußeren Durchmesser des Steckers 219 und/oder der Steckerbuchse und die Form der Öffnung 216 im Wesentlichen der Form des Steckers 219 (und/oder der Steckerbuchse 217).

Insbesondere kann die Öffnung 216 derart gebildet sein, dass nur die Steckerbuchsenoberfläche zugänglich ist (und beispielsweise keine Öffnung oder Spalt in das (übrige) Gehäuseinnere möglich ist). Beispielsweise kann hierzu die Öffnung 216 an ihrem Rand einen nach unten, insbesondere in Richtung des Bodens 204, ragenden umlaufenden Vorsprung 229 umfassen. Der umlaufende Vorsprung 229 ist zumindest derart eingerichtet, dass der Abstand zwischen dem Vorsprungsende 229 und der Steckerbuchse 217, vorliegend der verschiebbaren Schutzplatte 226, zumindest kleiner als 1 cm, vorzugsweise zumindest kleiner als 0,5 cm, besonders bevorzugt zumindest kleiner als 0,1 cm ist. Beispielsweise kann der Vorsprung 229 die Schutzplatte 226 kontaktieren, ohne dass hierdurch eine Bewegung der Schutzplatte 226 verhindert wird.

Die Sicherheit kann bei einer derartigen Ladevorrichtung 200 signifikant verbessert werden.

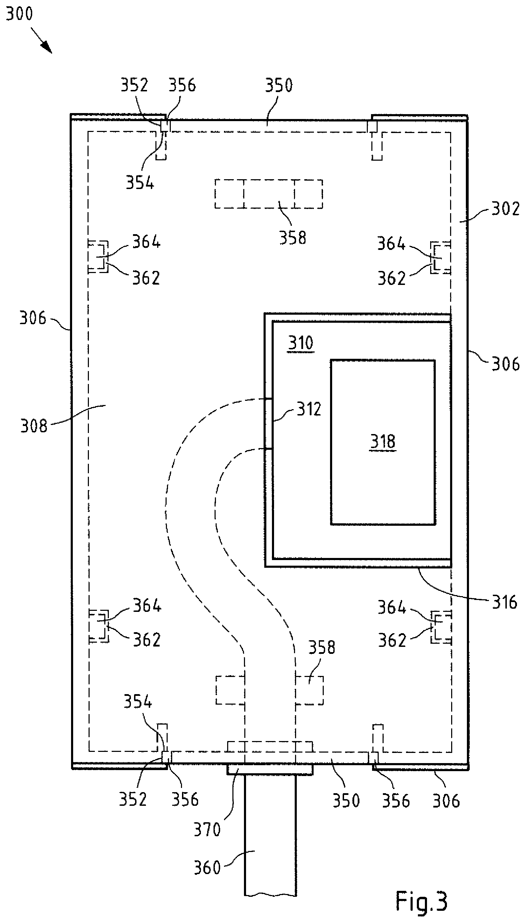

Die Figur 3 zeigt eine schematische (Drauf-) Ansicht eines Ausführungsbeispiels einer Ladevorrichtung 300 in einem geschlossen Zustand des Gehäuses 300. Zur Vermeidung von Wiederholungen werden nachfolgend im Wesentlichen nur die Unterschiede zu den Ausführungsbeispielen nach den vorherigen Figuren 1 bis 2b beschrieben. Für die anderen Komponenten einer Ladevorrichtung 300 wird insbesondere auf die obigen Ausführungen verwiesen.

Vorliegend weist das Gehäuse 302 an den Stirnseiten jeweils eine lösbare Kabeldurchführungsplatte 350 in einer hierzu korrespondierenden Plattenaufnahme 352 auf. In der Figur 3 ist die Kabeldurchführungsplatte 350 in einem eingesetzten Zustand dargestellt. Für eine ausreichende Befestigung umfasst die Plattenaufnahme 352 eine Ausnehmung 354, insbesondere eine Nut 354. Der Randbereich 356 der Kabeldurchführungsplatte 350, der insbesondere durch ein Dichtelement 356 zumindest teilweise gebildet sein kann, korrespondiert zu der Ausnehmung 354, so dass eine sichere und vorzugsweise dichtende Haltung der Kabeldurchführungsplatte 350 in der ersten Plattenaufnahme 352 in einem eingesetzten Zustand bereitgestellt werden kann.

Eine Kabeldurchführungsplatte 350 kann einen ersten (Flächen-) Bereich und einen zweiten (Flächen-) Bereich aufweisen, der von dem ersten Bereich umgeben ist. Der zweite Bereich kann vorliegend mindestens einen ersten potentiellen Gehäusekabelöffnungsbereich bilden. Der erste potentielle Gehäusekabelöffnungsbereich ist insbesondere ein Bereich der Kabeldurchführungsplatte, in dem eine (nicht gezeigte) Gehäusekabelöffnung herstellbar ist, um ein Kabel durch diese Gehäusekabelöffnung in das Gehäuse 302 einzuführen. Insbesondere kann in dem potentiellen Gehäusekabelöffnungsbereich eine Gehäusekabelöffnung in exakter und insbesondere einfacherer Weise hergestellt werden (im Vergleich zu dem ersten Bereich). Dies kann beispielsweise durch eine (geeignete) Materialwahl für den Gehäusekabelöffnungsbereich und/oder durch eine (geeignete) Dickenwahl für den Gehäusekabelöffnungsbereich (insbesondere im Vergleich zu dem Bereich) erreicht werden.

Die Herstellung der Gehäusekabelöffnung kann insbesondere bei einer gelösten bzw. herausgenommenen Kabeldurchführungsplatte 350 durchgeführt werden. Nach Herstellung der Gehäusekabelöffnung und einem Einsetzen des Kabels (mittels einer Verschraubung) kann die Kabeldurchführungsplatte 350 wieder in die Plattenaufnahme 352 gesetzt werden. Dann kann das Kabel beispielsweise mit der Leistungsschnittstelleneinrichtung 310 (oder einer Kommunikationsschnittstelleneinrichtung) verbunden werden.

Optional können in dem Gehäuse 300 Kabelführungselemente 358 angeordnet sein. Ein insbesondere U-förmiges Kabelführungselement 358 kann ein Halten und Verlegen eines Versorgungsnetzanschlusskabels 360 innerhalb des Gehäuses 300 zumindest unterstützen.

Zudem kann das Gehäuse 300 über mindestens ein Befestigungsmittel 362, insbesondere eine Mehrzahl von Befestigungsmitteln 362, verfügen. Wie der Figur 3 zu entnehmen ist, kann ein Befestigungsmittel 362, dass beispielsweise an der Seitenwand 306 angeordnet sein kann, mit einem entsprechenden Befestigungsmittel 364 des Schutzgehäusedeckels 308 zusammenwirken. Insbesondere können die Befestigungsmittel 362, 364 derart zusammenwirken, dass eine Kabeldurchführungsplatte 350 in einem geschlossenen Zustand geklemmt in der Plattenaufnahme 352 gehalten wird. Insbesondere kann von dem Gehäusedeckel 308 in diesem Zustand ein ausreichender Druck auf die eine Kabeldurchführungsplatte 350 ausgeübt werden.

Alternativ oder zusätzlich kann auf das Gehäuse 302 ein weiteres (nicht gezeigtes) Gehäuse mittels (nicht gezeigter) Befestigungsmittel angeordnet und insbesondere befestigt werden. In diesem Fall kann das weitere Gehäuse den Schutzgehäusedeckel 308 in dem geschlossenen Zustand (zusätzlich) halten.

Ferner ist in der Figur 3 ein an die Leistungsschnittstelleneinrichtung 310, insbesondere den ersten Leistungsanschluss 312, angeschlossenes Versorgungsnetzanschlusskabel 360 dargestellt. Das Versorgungsnetzanschlusskabel 360 wird insbesondere durch eine Gehäusekabelöffnung, die in einem potentiellen Gehäusekabelöffnungsbereich einer Kabeldurchführungsplatte 350 hergestellt ist, in das Gehäuse 302 eingeführt. Wie ferner zu erkennen ist, kann das Versorgungsnetzanschlusskabel 360 mittels einer Verschraubung 370 an der Gehäusekabelöffnung bzw. der Kabeldurchführungsplatte 350 fixiert sein.

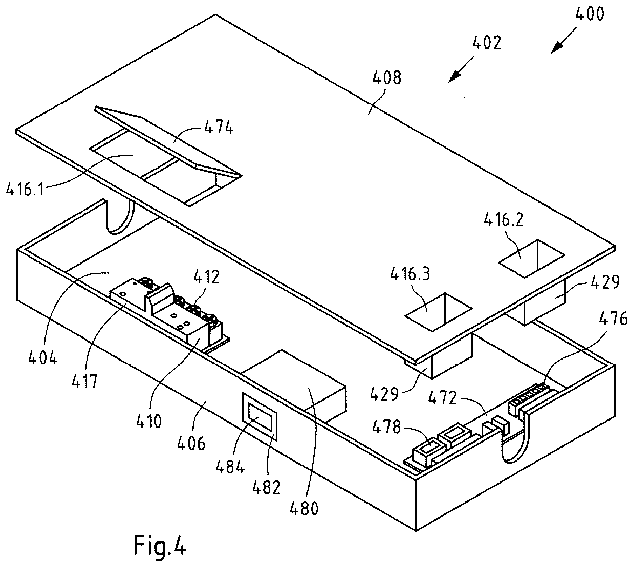

Die Figur 4 zeigt eine schematische Ansicht eines weiteren Ausführungsbeispiels einer Ladevorrichtung 400 mit einem weiteren Ausführungsbeispiel eines Gehäuses 402 gemäß der vorliegenden Anmeldung. Das Gehäuse 402 ist in einem geöffneten Zustand dargestellt. Zur Vermeidung von Wiederholungen werden nachfolgend im Wesentlichen nur die Unterschiede zu den Ausführungsbeispielen nach den vorherigen Figuren 1 bis 3 beschrieben. Für die anderen Komponenten einer Ladevorrichtung 400 wird insbesondere auf die obigen Ausführungen verwiesen.

Wie zu erkennen ist, korrespondiert der Schutzgehäusedeckel 408, insbesondere die Form des Schutzgehäusedeckels 408, zu dem umlaufenden Rand der durch die Seitenwand 406 gebildeten Gehäuseöffnung. Vorliegend ist in dem Gehäuse 402 eine zuvor beschriebene Leistungsschnittstelleneinrichtung 410 mit einem ersten Leistungsanschluss 412 und einer (zuvor beschriebenen) Steckerbuchse 417 angeordnet, welche mindestens einen zweiten Leistungsanschluss umfasst bzw. bildet.

Ferner ist vorliegend in dem Gehäuse 402 eine Kommunikationsschnittstelleneinrichtung 472 angeordnet. Die Kommunikationsschnittstelleneinrichtung 472 weist eine Mehrzahl von (unterschiedlichen) Kommunikationsanschlüssen 476, 478 für insbesondere unterschiedliche Kommunikationsverbindungsarten auf.

Der Schutzgehäusedeckel 408 weist vorliegend eine Mehrzahl von Öffnungen 416.1 bis 416.3 auf. Eine erste Öffnung 416.1 kann über eine optionale Klappe 474 verfügen, um die erste Öffnung 416.1 verschließen und öffnen zu können. Die erste Öffnung 416.1 ist insbesondere zum Ermöglichen der elektrischen Leistungsverbindungsherstellung zwischen dem zweiten Leistungsanschluss der elektrischen Leistungsschnittstelleneinrichtung 410 (vorliegend der Steckerbuchse 417) und z.B. einem (nicht gezeigten) dritten Leistungsanschluss einer Ladeeinrichtung, wie einer Ladebuchse, eingerichtet.

Mindestens eine zweite Öffnung 416.2, 416.3 kann zum Ermöglichen einer kontaktbehafteten Kommunikationsverbindungsherstellung zwischen einem der ersten Kommunikationsanschlüsse 476, 478 und einem (nicht gezeigten) zweiten Kommunikationsanschluss vorgesehen sein.

In dem vorliegenden Ausführungsbeispiel umfasst die Ladevorrichtung 400 zudem eine in dem Gehäuse 402 angeordnete Zählereinrichtung 480, insbesondere einen sogenannten Smart Meter 480. Die Zählereinrichtung 480 ist insbesondere mit der elektrischen Leistungsschnittstelleneinrichtung 410 über eine (nicht gezeigte) elektrische Verbindung koppelbar. Die Zählereinrichtung 480 kann eingerichtet sein, um den Stromfluss, insbesondere den Stromverbrauch, der gesamten Ladestation zu erfassen.

Wie ferner zu erkennen ist, weist die Zählereinrichtung 480 mindestens eine Anzeige 484 insbesondere in Form eines Displays 484 auf. Die Anzeige 484 ist zumindest dazu eingerichtet, den erfassten Stromfluss bzw. die erfasste Strommenge, insbesondere den erfassten Stromverbrauch, anzuzeigen.

Um eine Ablesung der Anzeige 484 auch in einem geschlossenen Zustand und insbesondere in einem verplombten Zustand des Gehäuses 402 zu ermöglichen, ist vorzugsweise ein transparentes Sichtfenster 482 (z.B. auch einem transparenten Kunststoff oder einem anderen transparenten Material) in der umlaufenden Seitenwand 406 angeordnet. Das Sichtfenster 482 und die Zählereinrichtung 480 sind insbesondere derart angeordnet, dass die Anzeige 484 durch das Sichtfenster 482 sichtbar und insbesondere ablesbar ist.

Ferner kann im verschlossenen Zustand des Gehäuses 402 mindestens eine (nicht gezeigte) Verplombungseinrichtung anbringbar sein. Hierdurch kann der Manipulationsschutz, insbesondere hinsichtlich der Zählereinrichtung 480, verbessert werden.

## Patentansprüche

1. Ladevorrichtung (100, 200,300,400) in Form einer Ladestation für Elektrofahrzeuge, umfassend:
- mindestens ein Gehäuse (102, 202, 302, 402) mit einem Boden (104, 204, 304, 404), einer umlaufenden Seitenwand (106, 206, 306, 406) und mindestens einem lösbaren Schutzgehäusedeckel (108, 208, 308, 408),
- mindestens eine in dem Gehäuse (102, 202, 302, 402) angeordnete elektrische Leistungsschnittstelleneinrichtung (110, 210, 310, 410) mit mindestens einem ersten Leistungsanschluss (112, 312, 412), eingerichtet zum Anschließen mindestens eines in das Gehäuse (102, 202, 302, 402) einführbaren Versorgungsnetzanschlusskabels (460),
- wobei in einem geschlossenen Zustand des Gehäuses (102, 202, 302, 402) der Schutzgehäusedeckel (108,208,308,408) das Gehäuse (102,202,302,402) verschließt, und
- wobei der Schutzgehäusedeckel (108, 208, 308, 408) mindestens eine Öffnung (116, 216,316,416.1, 416.2, 416.3) zum Ermöglichen einer elektrischen Leistungsverbindungsherstellung zwischen mindestens einem zweiten Leistungsanschluss (118, 318) der elektrischen Leistungsschnittstelleneinrichtung (110,210,310,410) und mindestens einem dritten Leistungsanschluss einer außerhalb des Gehäuses (102, 202, 302, 402) angeordneten Ladeeinrichtung umfasst,
- wobei das Gehäuse (102, 202, 302, 402) mindestens ein erstes Befestigungsmittel aufweist, das zu mindestens einem weiteren Befestigungsmittel eines weiteren Gehäuses der Ladevorrichtung (100, 200, 300, 400) korrespondiert, wobei in dem weiteren Gehäuse zumindest die Ladeeinrichtung angeordnet ist, und wobei die Ladeeinrichtung zumindest eine Ladesteckeraufnahme umfasst,
**dadurch gekennzeichnet, dass**
der Schutzgehäusedeckel (108, 208,308,408) in dem geschlossenen Zustand des Gehäuses (102, 202, 302, 402) das Gehäuse (102, 202, 302, 402) derart verschließt, dass der Schutzgehäusedeckel (108, 208, 308, 408) einen elektrischen Berührschutz bereitstellt, und das weitere Gehäuse mit dem ersten Gehäuse (102, 202, 302, 402) derart befestigt ist, dass der Schutzgehäusedeckel (108, 208, 308, 408) vor einem Zugriff in einem befestigten Zustand geschützt ist.

2. Ladevorrichtung (100, 200, 300, 400) nach Anspruch 1,
**dadurch gekennzeichnet, dass**
- die Leistungsschnittstelleneinrichtung (110,210,310,410) mindestens einen weiteren zweiten Leistungsanschluss umfasst,
- die mindestens eine Öffnung (116,216,316,416.1, 416.2, 416.3) zum Ermöglichen einer elektrischen Leistungsverbindungsherstellung zwischen dem weiteren zweiten Leistungsanschluss und mindestens einem vierten elektrischen Leistungsanschluss eingerichtet ist, und
- der weitere zweite Leistungsanschluss zum Versorgen mindestens eines elektrischen Verbrauchers der Ladevorrichtung (100,200,300,400) mit elektrischer Energie eingerichtet ist.

3. Ladevorrichtung (100, 200,300,400) nach einem der vorherigen Ansprüche,
**dadurch gekennzeichnet, dass**
- mindestens einer der zweiten Leistungsanschlüsse (118, 318) eine Steckerbuchse (217,417) mit einer Mehrzahl von ersten Kontakten (213,214) ist,
- zumindest der dritte Leistungsanschluss und/oder der vierte Leistungsanschluss ein Stecker (219) mit einer Mehrzahl von zweiten Kontakten (221, 222) ist, die zu den ersten Kontakten (213,214) korrespondieren, derart, dass in einem verbundenen Zustand ein Leistungsfluss über die mindestens eine hergestellte elektrische Leistungsverbindung ermöglicht wird.

4. Ladevorrichtung (100, 200,300,400) nach Anspruch 3, **dadurch gekennzeichnet, dass**
- die Steckerbuchse (217,417) mindestens eine verschiebbare Schutzplatte (226) mit einer Mehrzahl von Plattenöffnungen (228) aufweist, die zu Kontaktöffnungen (224) der ersten Kontakte (213, 214) korrespondieren,
- wobei die Schutzplatte (226) eingerichtet ist, in einem unverbundenen Zustand die Kontaktöffnungen (224) der ersten Kontakte (213,214) zu verschließen, und
- wobei die Schutzplatte (226) eingerichtet ist, derart mit dem Stecker (219) zusammenzuwirken, dass durch ein Einführen des Steckers (219) in die Steckerbuchse (217, 717) eine Verschiebung der Schutzplatte (226) derart bewirkt wird, dass die zweiten Kontakte (221,222) durch die Plattenöffnungen (228) der Schutzplatte (226) in die Kontaktöffnungen (224) der ersten Kontakte (213, 214) einführbar sind.

5. Ladevorrichtung (100, 200, 300, 400) nach einem der vorherigen Ansprüche, **dadurch gekennzeichnet, dass**
- in dem Gehäuse (102, 202, 302, 402) mindestens eine Kommunikationsschnittstelleneinrichtung (472) angeordnet ist, und
- der Schutzgehäusedeckel (108,208,308,408) mindestens eine Öffnung (116, 216,316,416.1, 416.2, 416.3) zum Ermöglichen einer kontaktbehafteten Kommunikationsverbindungsherstellung zwischen mindestens einem ersten Kommunikationsanschluss (476,478) der Kommunikationsschnittstelleneinrichtung (472) und mindestens einem zweiten Kommunikationsanschluss einer außerhalb des Gehäuses (102, 202, 302, 402) angeordneten Verarbeitungseinheit umfasst.

6. Ladevorrichtung (100, 200, 300, 400) nach einem der vorherigen Ansprüche, **dadurch gekennzeichnet, dass** der Gehäuseschutzdeckel (108, 208,308,408) mindestens eine beweglich mit dem Gehäuseschutzdeckel (108, 208, 308, 408) verbundene Klappe (474) aufweist, eingerichtet zum Verschließen mindestens einer Öffnung (116,216,316,416.1, 416.2, 416.3) des Gehäuseschutzdeckels (108,208,308,408) in einem geschlossenen Zustand der Klappe (474).

7. Ladevorrichtung (100, 200, 300, 400) nach einem der vorherigen Ansprüchen, **dadurch gekennzeichnet, dass** das Gehäuse (102, 202,302,402) in dem geschlossenen Zustand mindestens eine mit der elektrischen Leistungsschnittstelleneinrichtung (110, 210,310,410) koppelbare Zählereinrichtung aufweist.

8. Ladevorrichtung (100, 200, 300, 400) nach einem der vorherigen Ansprüchen, **dadurch gekennzeichnet, dass**
- der Boden (108, 208,308,408), die umlaufende Seitenwand (106,206,306,406) und/oder der lösbare Schutzgehäusedeckel (108,208,308,408) mindestens ein transparentes Sichtfenster aufweist.

9. Ladevorrichtung (100, 200, 300, 400) nach Anspruch 8, **dadurch gekennzeichnet, dass**
- das Sichtfenster derart angeordnet ist, dass eine Anzeige einer Zählereinrichtung durch das Sichtfenster sichtbar ist.

10. Ladevorrichtung (100,200,300,400) nach einem der vorherigen Ansprüchen, **dadurch gekennzeichnet, dass** die Ladevorrichtung (100, 200, 300, 400) mindestens eine Verplombungseinrichtung umfasst, eingerichtet zum Verplomben des Gehäuseschutzdeckels (108, 208,308,408) mit der umlaufenden Seitenwand (106, 206,306,406) und/oder dem Boden (108,208, 308,408) in einem geschlossenen Zustand des Gehäuses (102, 202,302,402).

## Claims

1. Charging device (100, 200, 300, 400) in the form of a charging station for electric vehicles, comprising:
- at least one housing (102, 202, 302, 402) with a floor (104, 204, 304, 404), a peripheral side wall (106, 206, 306, 406) and at least one detachable protective housing cover (108, 208, 308, 408),
- at least one electrical power interface device (110, 210, 310, 410) which is arranged in the housing (102, 202, 302, 402) and has at least one first power connection (112, 312, 412), designed for connecting at least one power supply system connection cable (460) which can be inserted into the housing (102, 202, 302, 402),
- wherein the protective housing cover (108, 208, 308, 408) closes the housing (102, 202, 302, 402) in a closed state of the housing (102, 202, 302, 402), and
- wherein the protective housing cover (108, 208, 308, 408) comprises at least one opening (116, 216, 316, 416.1, 416.2, 416.3) for allowing an electrical power connection to be established between at least one second power connection (118, 318) of the electrical power interface device (110, 210, 310, 410) and at least one third power connection of a charging device arranged outside the housing (102, 202, 302, 402),
- wherein the housing (102, 202, 302, 402) has at least one first fastening means which corresponds to at least one further fastening means of a further housing of the charging device (100, 200, 300, 400), wherein at least the charging device is arranged in the further housing, and wherein the charging device comprises at least one charging plug receptacle, **characterized in that** the protective housing cover (108, 208, 308, 408) closes the housing (102, 202, 302, 402) in the closed state of the housing (102, 202, 302, 402) in such a way that the protective housing cover (108, 208, 308, 408) provides electrical contact protection,
and the further housing is fastened to the first housing (102, 202, 302, 402) in such a way that the protective housing cover (108, 208, 308, 408) is protected against access in a fastened state.

2. Charging device (100, 200, 300, 400) according to Claim 1, **characterized in that**
- the power interface device (110, 210, 310, 410) comprises at least one further second power connection,
- the at least one opening (116, 216, 316, 416.1, 416.2, 416.3) is designed to allow an electrical power connection to be established between the further second power connection and at least one fourth electrical power connection, and
- the further second power connection is designed to supply electrical energy to at least one electrical consumer of the charging device (100, 200, 300, 400).

3. Charging device (100, 200, 300, 400) according to either of the preceding claims, **characterized in that**
- at least one of the second power connections (118, 318) is a plug socket (217, 417) with a plurality of first contacts (213, 214),
- at least the third power connection and/or the fourth power connection is a plug (219) with a plurality of second contacts (221, 222) which correspond to the first contacts (213, 214) in such a way that, in a connected state, power flow via the at least one established electrical power connection is rendered possible.

4. Charging device (100, 200, 300, 400) according to Claim 3, **characterized in that**
- the plug socket (217, 417) has at least one displaceable protective plate (226) with a plurality of plate openings (228) which correspond to contact openings (224) in the first contacts (213, 214),
- wherein the protective plate (226) is designed to close the contact openings (224) in the first contacts (213, 214) in an unconnected state, and
- wherein the protective plate (226) is designed to interact with the plug (219) in such a way that, by inserting the plug (219) into the plug socket (217, 717), the protective plate (226) is displaced in such a way that the second contacts (221, 222) can be inserted into the contact openings (224) in the first contacts (213, 214) through the plate openings (228) in the protective plate (226).

5. Charging device (100, 200, 300, 400) according to any of the preceding claims, **characterized in that**
- at least one communication interface device (472) is arranged in the housing (102, 202, 302, 402), and
- the protective housing cover (108, 208, 308, 408) comprises at least one opening (116, 216, 316, 416.1, 416.2, 416.3) for allowing a contact-based communication connection to be established between at least one first communication connection (476, 478) of the communication interface device (472) and at least one second communication connection of a processing unit arranged outside the housing (102, 202, 302, 402).

6. Charging device (100, 200, 300, 400) according to any of the preceding claims, **characterized in that** the housing protective cover (108, 208, 308, 408) has at least one flap (474) which is moveably connected to the housing protective cover (108, 208, 308, 408), designed for closing at least one opening (116, 216, 316, 416.1, 416.2, 416.3) in the housing protective cover (108, 208, 308, 408) in a closed state of the flap (474).

7. Charging device (100, 200, 300, 400) according to any of the preceding claims, **characterized in that** the housing (102, 202, 302, 402) has at least one meter device couplable to the electrical power interface device (110, 210, 310, 410) in the closed state.

8. Charging device (100, 200, 300, 400) according to any of the preceding claims, **characterized in that**
- the floor (108, 208, 308, 408), the peripheral side wall (106, 206, 306, 406) and/or the detachable protective housing cover (108, 208, 308, 408) have/has at least one transparent viewing window.

9. Charging device (100, 200, 300, 400) according to Claim 8, **characterized in that**
- the viewing window is arranged in such a way that a display of a meter device is visible through the viewing window.

10. Charging device (100, 200, 300, 400) according to any of the preceding claims, **characterized in that** the charging device (100, 200, 300, 400) comprises at least one sealing device, designed for sealing the housing protective cover (108, 208, 308, 408) with the peripheral side wall (106, 206, 306, 406) and/or the floor (108, 208, 308, 408) in a closed state of the housing (102, 202, 302, 402).

## Revendications

1. Système de charge (100, 200, 300, 400) sous la forme de station de recharge pour véhicules électriques, comprenant :
- au moins un boîtier (102, 202, 302, 402) comprenant un fond (104, 204, 304, 404), une paroi latérale (106, 206, 306, 406) périphérique et au moins un couvercle de boîtier de protection (108, 208, 308, 408) amovible,
- au moins un dispositif d'interface de puissance électrique (110, 210, 310, 410) disposé dans le boîtier (102, 202, 302, 402) comprenant au moins une première borne de puissance (112, 312, 412), conçu pour le raccordement d'au moins un câble de raccordement au réseau d'alimentation (460) pouvant être introduit dans le boîtier (102, 202, 302, 402),
- dans un état fermé du boîtier (102, 202, 302, 402), le couvercle de boîtier de protection (108, 208, 308, 408) fermant le boîtier (102, 202, 302, 402), et
- le couvercle de boîtier de protection (108, 208, 308, 408) comportant au moins une ouverture (116, 216, 316, 416.1, 416.2, 416.3) destinée à permettre l'établissement d'une connexion de puissance électrique entre au moins une deuxième borne de puissance (118, 318) du dispositif d'interface de puissance électrique (110, 210, 310, 410) et au moins une troisième borne de puissance d'un dispositif de recharge disposé à l'extérieur du boîtier (102, 202, 302, 402),
- le boîtier (102, 202, 302, 402) possédant au moins un premier moyen de fixation, qui correspond à au moins un moyen de fixation supplémentaire d'un boîtier supplémentaire du système de charge (100, 200, 300, 400), au moins le dispositif de recharge étant disposé dans le boîtier supplémentaire, et le dispositif de recharge comprenant au moins un logement de fiche de charge, **caractérisé en ce que**
le couvercle de boîtier de protection (108, 208, 308, 408) en position fermée du boîtier (102, 202, 202, 402) ferme le boîtier (102, 302, 302, 402) de telle sorte que le couvercle de boîtier de protection (108, 208, 308, 408) fournit une protection contre le contact électrique, et le boîtier supplémentaire est fixé au premier boîtier (102, 202, 302, 402) de telle sorte que le couvercle de boîtier de protection (108, 208, 308, 408) est protégé contre un accès dans un état fixé.

2. Système de charge (100, 200, 300, 400) selon la revendication 1, **caractérisé en ce que**
- le dispositif d'interface de puissance (110, 210, 310, 410) comporte au moins une deuxième borne de puissance supplémentaire,
- l'au moins une ouverture (116, 216, 316, 416.1, 416.2, 416.3) est conçue pour permettre l'établissement d'une connexion de puissance électrique entre la deuxième borne de puissance supplémentaire et au moins une quatrième borne de puissance électrique, et
- la deuxième borne de puissance supplémentaire est conçue pour alimenter au moins un consommateur électrique du système de charge (100, 200, 300, 400) en énergie électrique.

3. Système de charge (100, 200, 300, 400) selon l'une des revendications précédentes, **caractérisé en ce que**
- au moins l'une des deuxièmes bornes de puissance (118, 318) est une douille d'enfichage (217, 417) comprenant une pluralité de premiers contacts (213, 214),
- au moins la troisième borne de puissance et/ou la quatrième borne de puissance est une fiche (219) comprenant une pluralité de deuxièmes contacts (221, 222) qui correspondent aux premiers contacts (213, 214), de telle sorte que, dans un état connecté, un flux de puissance est rendu possible par le biais de l'au moins une connexion de puissance électrique établie.

4. Système de charge (100, 200, 300, 400) selon la revendication 3, **caractérisé en ce que**
- la douille d'enfichage (217, 417) possède au moins une plaque de protection (226) coulissante pourvue d'une pluralité d'ouvertures de plaque (228) qui correspondent aux ouvertures de contact (224) des premiers contacts (213, 214),
- la plaque de protection (226) étant conçue pour, dans un état non connecté, fermer les ouvertures de contact (224) des premiers contacts (213, 214), et
- la plaque de protection (226) étant configurée pour coopérer avec la fiche (219) de telle sorte qu'une introduction de la fiche (219) dans la douille d'enfichage (217, 717) provoque un coulissement de la plaque de protection (226) de telle sorte que les deuxièmes contacts (221, 222) peuvent être introduits dans les ouvertures de contact (224) des premiers contacts (213, 214) à travers les ouvertures de plaque (228) de la plaque de protection (226).

5. Système de charge (100, 200, 300, 400) selon l'une des revendications précédentes, **caractérisé en ce que**
- au moins un dispositif d'interface de communication (472) est disposé dans le boîtier (102, 202, 302, 402), et
- le couvercle de boîtier de protection (108, 208, 308, 408) comporte au moins une ouverture (116, 216, 316, 416.1, 416.2, 416.3) destinée à permettre l'établissement d'une connexion de communication avec contact entre au moins une première borne de communication (476, 478) du dispositif d'interface de communication (472) et au moins un deuxième port de communication d'une unité de traitement disposée à l'extérieur du boîtier (102, 202, 302, 402).

6. Système de charge (100, 200, 300, 400) selon l'une des revendications précédentes, **caractérisé en ce que** le couvercle de protection de boîtier (108, 208, 308, 408) possède au moins un clapet (474) mobile relié au couvercle de protection de boîtier (108, 208, 308, 408), conçu pour fermer au moins une ouverture (116, 216, 316, 416.1, 416.2, 416.3) du couvercle de protection de boîtier (108, 208, 308, 408) dans un état fermé du clapet (474).

7. Système de charge (100, 200, 300, 400) selon l'une des revendications précédentes, **caractérisé en ce que** le boîtier (102, 202, 302, 402), en position fermée, possède au moins un dispositif compteur pouvant être couplé au dispositif d'interface de puissance électrique (110, 210, 310, 410).

8. Système de charge (100, 200, 300, 400) selon l'une des revendications précédentes, **caractérisé en ce que**
- le fond (108, 208, 308, 408), la paroi latérale (106, 206, 306, 406) périphérique et/ou le couvercle de boîtier de protection (108, 208, 308, 408) amovible possèdent au moins une fenêtre d'observation transparente.

9. Système de charge (100, 200, 300, 400) selon la revendication 8, **caractérisé en ce que**
- la fenêtre d'observation est disposée de telle sorte qu'un afficheur d'un dispositif compteur est visible à travers la fenêtre d'observation.

10. Système de charge (100, 200, 300, 400) selon l'une des revendications précédentes, **caractérisé en ce que** le système de charge (100, 200, 300, 400) comporte au moins un dispositif de scellement, conçu pour sceller le couvercle de protection de boîtier (108, 208, 308, 408) avec la paroi latérale (106, 206, 306, 406) périphérique et/ou le fond (108, 208, 308, 408) dans un état fermé du boîtier (102, 202, 302, 402).
